(19) Europäisches Patentamt
European Patent Office
Office européen des brevets

(11) Numéro de publication: **0 162 751**
**B1**

# (12) FASCICULE DE BREVET EUROPÉEN

(45) Date de publication du fascicule du brevet: **23.11.88**

(51) Int. Cl.[4]: **G 01 T 7/04**

(21) Numéro de dépôt: **85400790.3**

(22) Date de dépôt: **22.04.85**

## (54) Dispositif de contrôle de contamination atmosphérique due à des aérosols émetteurs de particules alpha.

(30) Priorité: **27.04.84 FR 8406690**

(43) Date de publication de la demande: **27.11.85 Bulletin 85/48**

(45) Mention de la délivrance du brevet: **23.11.88 Bulletin 88/47**

(84) Etats contractants désignés: **BE DE GB IT**

(56) Documents cité:
**FR-A-2 192 316**
**US-A-2 497 823**
**US-A-4 185 199**

(73) Titulaire: **COMMISSARIAT A L'ENERGIE ATOMIQUE, 31/33, rue de la Fédération, F-75015 Paris (FR)**

(72) Inventeur: **Carossi, Jean- Claude, 62, Avenue Saint Armand la Pinède, F-04860 Pierrevert (FR)**
Inventeur: **Viera, David Da Costa, 88, Village du Soleil, F-13540 Puyricard (FR)**
Inventeur: **Thirion, Claude, La Colline, F-84120 Beaumont Le Pertuis (FR)**

(74) Mandataire: **Mongrédien, André, c/o BREVATOME 25, rue de Ponthieu, F-75008 Paris (FR)**

**EP 0 162 751 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

**Description**

La présente invention a pour objet un dispositif de contrôle de contamination atmosphérique applicable plus particulièrement aux atmosphères polluées par des aérosols émettant des particules α.

L'invention s'applique notamment au cas où les aérosols renferment du plutonium, de l'uranium, du curium ou d'autres éléments dont les énergies des particules α sont, en général, inférieures à 6 MeV. Lorsqu'on désire détecter de tels aérosols, les produits de filiation des isotopes du radon contenus dans l'atmosphère, qui sont eux-mêmes émetteurs de particules α, gênent considérablement les mesures, en particulier: le radium A(Po-218) et le thorium C(Bi-212), qui ont une énergie d'émission de 6 MeV, le radium C' (Po-214) qui a une énergie d'émission de 7,7 MeV et le thorium C' (Po-212) qui a une énergie d'émission de 8,8 MeV.

La technique usuelle pour détecter ces aérosols consiste à aspirer l'air à travers un filtre qui arrête les aérosols. Ce filtre est placé en face d'un détecteur spectrométrique associé à des sélecteurs d'amplitude permettant de discriminer les émissions dues au radon de celles dues aux aérosols recherchés. Le détecteur, souvent de forme circulaire, est situé parallèlement au filtre et en regard de celui-ci, du côté où les aérosols sont piégés et à une distance de quelques millimètres. En effet, cet espace est nécessaire pour laisser le passage du courant gazeux qui véhicule les aérosols. L'énergie des particules α qui émergent du filtre vers le détecteur est partiellement absorbée par l'air. Certaines particules suivent un trajet perpendiculaire au filtre et au détecteur, tandis que d'autres suivent un trajet plus ou moins incliné ainsi, pour une énergie d'émission donnée, on détecte les particules α avec une énergie d'autant plus faible qu'elles ont suivi un parcours dans l'air plus long, c'est-à-dire plus incliné par rapport à la direction perpendiculaire au filtre et au détecteur. Cette perte d'énergie a pour conséquence une superposition des énergies "dégradées" des particules α des produits de filiation des isotopes du radon avec les énergies plus faibles des particules α des isotopes qu'on veut détecter.

La figure 1 est une courbe qui donne le nombre N de particules α détectées en fonction de l'énergie d'émission E. On voit sur la figure deux pics dont l'un correspond aux particules α du radium C', tandis que l'autre correspond aux particules α du radium A et du thorium C ayant subi une perte d'énergie par interaction avec l'air et dont l'énergie dégradée restante est du même ordre de grandeur que celle des particules α du plutonium 238, par exemple, et se superpose au pic énergétique de ce dernier. La zone hachurée A à gauche du pic correspondant au radium A et au thorium C correspond à des coups parasites dus au radon dans la fenêtre utile pour détecter le plutonium 238.

Deux solutions ont été apportées pour pallier cet inconvénient. La première consiste à disposer une grille à alvéoles fermés entre le filtre et le détecteur afin d'arrêter les particules α ne suivant pas une direction quasiment perpendiculaire à ces derniers. Un tel dispositif est illustré à la figure 2 où l'on voit qu'il se compose d'un filtre 2, qui a la forme d'un disque plan, et d'un détecteur 4 ayant lui-même une forme circulaire et présentant une face de détection 6 plane et disposée en regard du filtre 2. Entre le filtre 2 et la face 6 du détecteur 4 est disposée une grille 8 comportant un certain nombre d'alvéoles 10 dont le pourtour est fermé par des plaques perpendiculaires au filtre et au détecteur, chaque alvéole étant ouvert d'une part du côté du filtre, et d'autre part du côté du détecteur. En général, les alvéoles ont une section carrée, le côté ayant une longueur d'environ 1 mm, tandis que l'épaisseur totale de la grille est généralement de l'ordre de quelques millimètres. Si ce dispositif arrête les particules α présentant un trajet incliné par rapport à la direction perpendiculaire au filtre et au détecteur, il présente néanmoins l'inconvénient suivant: afin de permettre le passage du courant gazeux véhiculant les particules α, on est obligé de ménager un espace entre le filtre et la grille. Il en résulte alors un espacement non négligeable entre le filtre et le détecteur, entraînant une perte d'énergie supplémentaire des particules a des aérosols piégés sur le filtre et que l'on veut détecter.

Une autre méthode consiste à utiliser des algorithmes pour évaluer le nombre de particules α parasites et les éliminer, par soustraction, du spectre enregistré, mais cette méthode entraîne des résultats imprécis.

La présente invention a justement pour but d'éliminer ces inconvénients en proposant un dispositif de contrôle de contamination qui permet de mesurer directement l'énergie des particules α des aérosols sans perte importante du rendement de détection et sans nécessiter des calculs supplémentaires.

Le dispositif de contrôle de contamination objet de l'invention comporte, de manière connue, un filtre plan servant à retenir les aérosols, un détecteur ayant une face de détection plane disposée en regard du filtre et parallèlement à celui-ci, et une grille disposée entre le filtre et ladite face plane du détecteur. Selon l'invention, la grille se compose de plusieurs plaques disposées à la fois radialement et perpendiculairement au filtre et à ladite face plane du détecteur; chaque plaque s'étend sur toute la distance entre le filtre et ladite face plane et les plaques définissent entre elles des alvéoles dont chacun est ouvert vers l'extérieur de l'espace compris entre le filtre et le détecteur.

Selon un mode de réalisation préféré, le filtre et la face plane du détecteur sont circulaires, définissant ainsi un espace cylindrique, et les plaques constituant la grille passent par l'axe de cet espace cylindrique, et forment des secteurs ouverts vers l'extérieur.

Si, dans la forme préférée de réalisation, le filtre et le détecteur sont circulaires, d'autres formes sont possibles (polygonale par exemple) mais, dans tous les cas, le dispositif doit présenter un axe de symétrie perpendiculaire au filtre et au détecteur pour que le débit d'air soit régulièrement réparti tout autour de l'appareil. Dans tous les cas, les plaques s'étendent suivant une direction contenant l'axe de symétrie, c'est-à-dire dans une direction radiale, même si la forme du dispositif n'est pas circulaire. C'est en ce sens qu'il faut entendre l'expression "disposées radialement" utilisé dans le présent texte. De plus, cette disposition fait que

l'air peut pénétrer jusqu'au centre de l'appareil et les aérosols sont régulièrement répartis sur toute la surface du filtre.

L'invention apparaîtra mieux à la lecture de la description qui va suivre, donnée à titre d'exemple purement illustratif et nullement limitatif, en référence aux dessins annexés dans lesquels:

- la figure 1, déjà décrite, est un graphe indiquant le nombre de particules α détectées en fonction de l'énergie d'émission,
- la figure 2, déjà décrite, est une vue schématique en perspective d'un dispositif de contrôle selon l'art antérieur,
- la figure 3 est une vue schématique en perspective d'un dispositif conforme à l'invention, et
- la figure 4 est une vue schématique en élévation et partiellement en coupe illustrant un montage possible du dispositif objet de l'invention.

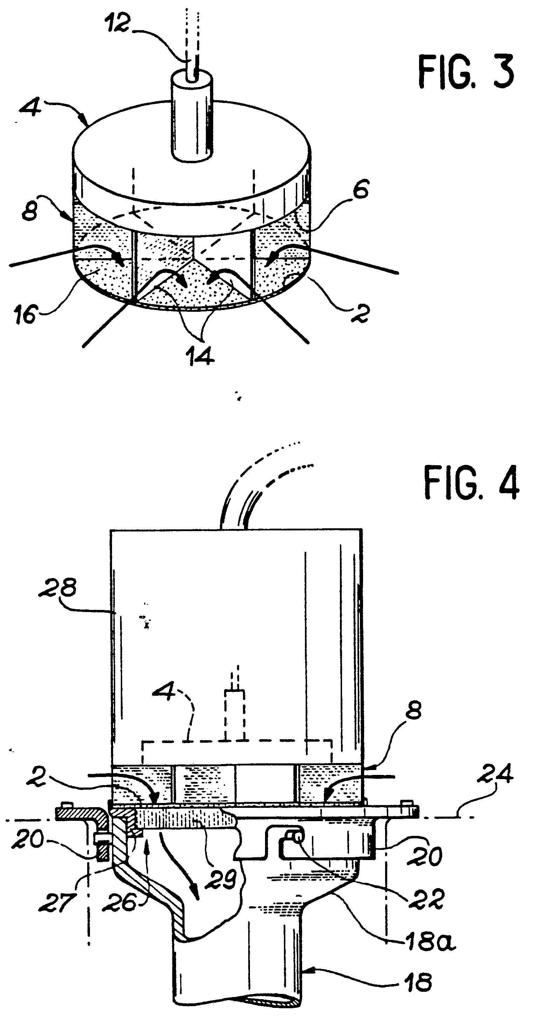

La figure 3 illustre un dispositif conforme à l'invention qui se compose, de manière classique, d'un filtre 2 placé en regard d'une face plane 6 d'un détecteur 4, ce dernier étant relié à des moyens de mesure par un ensemble de fils électriques 12. Une grille 8 est disposée entre le filtre 2 et le détecteur 4. Dans le cas particulier décrit ici, le filtre 2 et le détecteur 4 sont circulaires. La grille 8 est constituée de six plaques 14 disposées à la fois perpendiculairement au filtre 2 et à la face 6 du détecteur, et radialement par rapport à l'axe de symétrie du cylindre défini par le filtre et la face 6 du détecteur. Dans cet exemple, il y a six plaques faisant entre elles un angle de 60°, mais on ne sortirait pas du cadre de l'invention en modifiant le nombre de plaques. On voit sur la figure que deux plaques adjacentes définissent entre elles un alvéole ayant la forme d'un secteur 16 qui est ouvert sur l'extérieur du cylindre défini par le filtre 2 et le détecteur 4.

Cette disposition fait que les filets d'air qui transportent les aérosols pénètrent radialement dans les secteurs ouverts de la grille qui est en contact à la fois avec le filtre et le détecteur. Du fait du cloisonnement, le parcours aérien P d'une particule α est toujours inférieur à une valeur maximale $P_{max}$ égale à:

$$(1)\ P_{max} = \sqrt{r^2 + d^2}$$

où r désigne le rayon du filtre et du détecteur et d la distance entre le filtre 2 et la face 6 du détecteur 4.

En combinant cette équation avec la loi de GEIGER qui donne le libre parcours d'une particule α dans l'air en fonction de son énergie d'émission, on peut optimiser la géométrie du dispositif pour interdire que l'énergie détectée pour un descendant du radon ne tombe dans la bande d'énergie de détection du contaminant recherché. En effet, la loi de GEIGER s'écrit:

$$(2)\ P_{(cm)} = 0{,}32 \times E^{3/2}(\mathrm{MeV}) \text{ (à la pression atmosphérique)}$$

et en combinant les deux équations ci-dessus on trouve:

$$(3)\ \sqrt{d^2 + r^2} - d = 0{,}32 \times (E_1^{3/2} - E_0^{3/2})$$

$E_1$: énergie des éléments parasites,
$E_0$: énergie du contaminant recherché.

L'optimisation consiste à rechercher des couples de valeur d et r satisfaisant à cette équation 3.

Le tableau 1 ci-dessous donne des couples de valeurs d, r en mm pour une pression de 1 bar, lorsqu'on veut détecter du plutonium 238 (énergie d'émission $E_0$ = 5,5 MeV), et que l'atmosphère contient des dencendants du radium A ou du thorium C dont l'énergie d'émission $E_1$ est de 6 MeV.

| d en mm | r en mm | S utile en mm² du détecteur et du filtre | |
|---|---|---|---|
| 3 | 8,2 | 211 | |
| 3,5 | 8,5 | 227 | |
| 4 | 8,8 | 243 | p = 1 bar |
| 4,5 | 9,2 | 265 | |
| 5 | 9,5 | 283 | |

Un fonctionnement à une pression différente conduit à une géométrie optimisée différente car la loi de GEIGER doit être modifiée en fonction de la pression à laquelle on opère. Le tableau 2 donne des couples de valeurs d, r utilisables lorsqu'on opère à 0,7 bar.

| d en mm | r en mm | S utile en mm$^2$ | |
|---|---|---|---|
| 3 | 10,8 | 369 | |
| 3,5 | 11,2 | 395 | |
| 4 | 11,6 | 420 | p = 0,7 bar |
| 4,5 | 11,9 | 447 | |
| 5 | 12,3 | 473 | |

La figure 4 illustre un montage possible du dispositif objet de l'invention pour effectuer un prélèvement atmosphérique direct (un prélèvement en un point éloigné exigerait un montage beaucoup plus complexe). Le dispositif de la figure 4 se compose d'un tube 18 servant à aspirer l'atmosphère qu'on veut étudier, la partie supérieure 18a du tube 18 étant évasée. Une pièce support 20 est montée sur la partie 18a du tube 18 au moyen d'ergots 22 et elle est fixée sur une table ou un autre support 24 schématiquement représentée en traits mixtes sur la figure. La tête 18a du tube 18 soutient également un porte-filtre 26 qui soutient le filtre 2. La grille 8, identique à celle illustrée à la figure 3, réalise la liaison mécanique entre le support 20 et le détecteur 4 qui se trouve à l'intérieur d'un boîtier 28, ce dernier contenant également toute l'électronique associé au détecteur 4. Le porte-filtre 26 se compose d'une partie circulaire 27 qui soutient un disque central 29 fritté ou ajouré qui laisse passer le débit d'air tout en retenant le filtre proprement dit 2.

Ainsi, le dispositif objet de l'invention présente de nombreux avantages, puisqu'il permet de détecter des aérosols émetteurs de particules α par une mesure directe et sans qu'on soit gêné par les énergies parasites dues aux dérivés du radon. Il est simple et facile à réaliser, et peut être associé à un dispositif simple comme celui de la figure 4, ce qui en diminue le coût de fabrication.

## Revendications

1. Dispositif de contrôle de contamination atmosphérique dues à des aérosols émetteurs de particules α, du type comportant un filtre plan (2) servant à retenir les aérosols, un détecteur (4) ayant une face plane (6) disposée en regard du filtre (2) et parallèlement à celui-ci et une grille (8) disposée entre le filtre (2) et ladite face plane (6) du détecteur (4), caractérisé en ce que ladite grille (8) comprend plusieurs plaques (14) disposées à la fois radialement et perpendiculairement au filtre et à ladite face plane (6) du détecteur (4), s'étendant sur toute la distance entre le filtre (2) et ladite face plane (6) et définissant des alvéoles (16) dont chacun est ouvert vers l'extérieur de l'espace compris entre le filtre (2) et ladite face plane (6) du détecteur (4).

2. Dispositif selon la revendication 1, caractérisé en ce que le filtre (2) et la face plane (6) du détecteur (4) sont circulaires, définissant ainsi un espace cylindrique, et en ce que les plaques (14) constituant la grille (8) passent par l'axe dudit espace cylindrique et forment des alvéoles en forme de secteurs ouverts vers l'extérieur.

## Patentansprüche

1. Vorrichtung zur Überwachung der Luftverunreinigung durch Aerosol-Alphateilchen, enthaltend einen ebenen Filter (2), der zum Zurückhalten der Aerosole dient, einen Detektor (4), der eine ebene Seite (6) hat, die dem Filter (2) parallel gegenübersteht, und ein Gitter (8), das zwischen dem Filter (2) und der genannten ebenen Seite (6) des Detektors (4) angeordnet ist, dadurch gekennzeichnet, daß das genannte Gitter (8) mehrere Platten (14) enthält, die radial und zugleich senkrecht zum Filter und zu der genannten ebenen Seite (6) des Detektors (4) verlaufen und sich über die gesamte Distanz zwischen dem Filter (2) und der genannten ebenen Seite (6) erstrecken und Zellen (16) begrenzen, von denen jede außerhalb des zwischen dem Filter (2) und der genannten ebenen Seite (6) des Detektors (4) enthaltenen Zwischenraums offen ist.

2. Vorrichtung nach Anspruch 1, dadurch gekennzeichnet, daß der Filter (2) und die ebene Seite (6) des Detektors (4) kreisförmig sind, auf diese Weise einen zylindrischen Zwischenraum begrenzend, und daß die Platten (14), die das Gitter (8) bilden, durch die Achse des zylindrischen Zwischenraums verlaufen und Zellen in Form von nach außen offenen Sektoren bilden.

## Claims

1. Apparatus for checking atmospheric pollution due to alpha particle emitting aerosols of the type comprising a flat filter (2) for retaining the aerosols, a detector (4) having a planar face (6) positioned facing the filter (2) and parallel thereto and a grid (8) arranged between the filter (2) and said planar face (6) of the detector (4), characterized in that the grid (8) comprises a plurality of plates (14) arranged both radially and perpendicularly to the filter and to the planar face (6) of the detector (4) extending over the entire distance

between the filter (2) and said planar face (6) and defining cells (16), each of which is open towards the outside of the space between the filter (2) and said planar face (6) of the detector (4).

2. Apparatus according to claim 1, characterized in that the filter (2) and the planar face (6) of the detector (4) are circular, thus defining a cylindrical space, and in that the plates (14) constituting the grid (8) pass through the axis of said cylindrical space and form cells shaped like sectors open towards the outside.

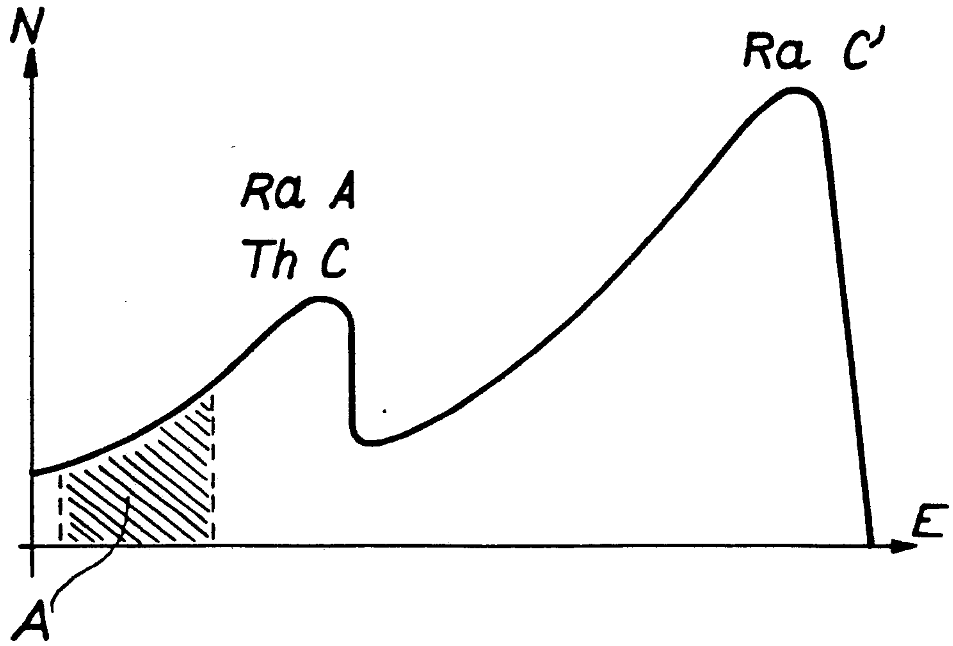


FIG. 1

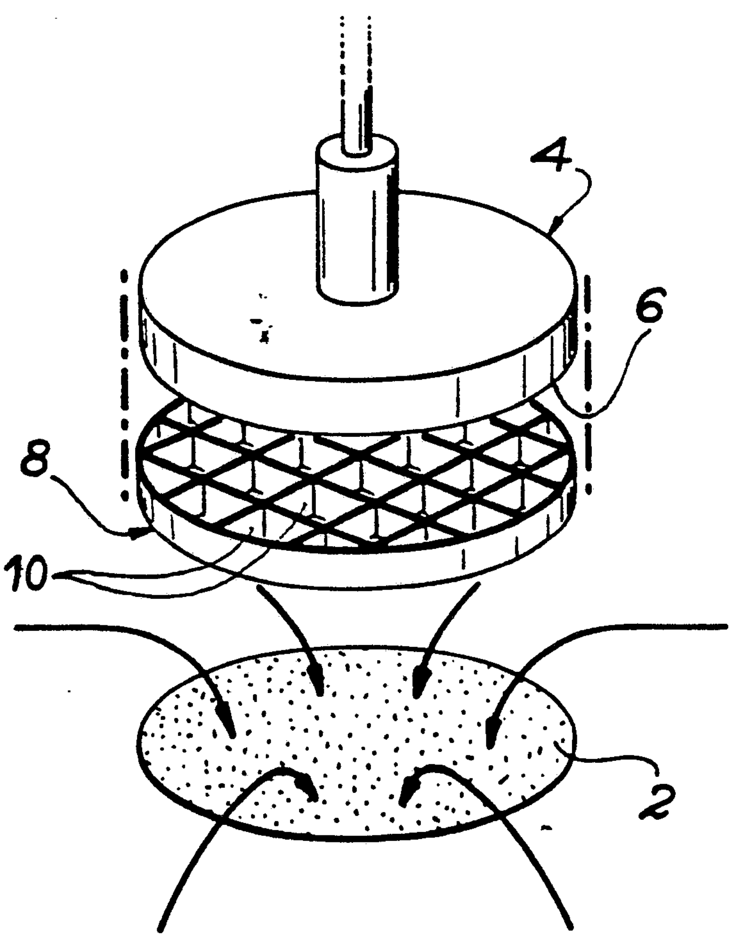


FIG. 2

FIG. 3

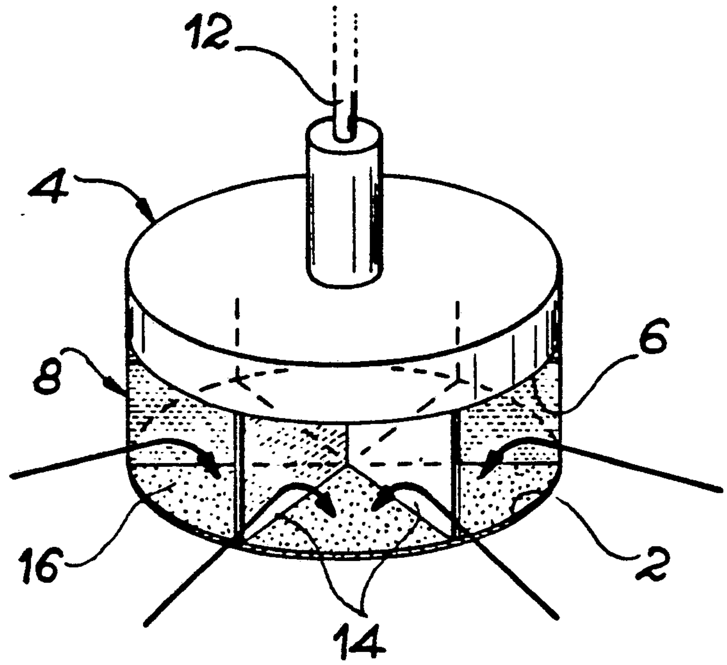


FIG. 4